Europäisches Patentamt

European Patent Office

Office européen des brevets

(19)

(11) **EP 1 191 315 A2**

(12) **EUROPÄISCHE PATENTANMELDUNG**

(43) Veröffentlichungstag:
**27.03.2002 Patentblatt 2002/13**

(51) Int Cl.[7]: **G01F 23/284**

(21) Anmeldenummer: **01117803.5**

(22) Anmeldetag: **21.07.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **12.09.2000 DE 10044888**

(71) Anmelder: **VEGA Grieshaber KG**
**77761 Schiltach (DE)**

(72) Erfinder:
• **Fehrenbach, Josef**
**77716 Haslach i.K. (DE)**
• **Griessbaum, Karl**
**77796 Mühlenbach (DE)**

(74) Vertreter: **Patentanwälte**
**Westphal, Mussgnug & Partner**
**Waldstrasse 33**
**78048 Villingen-Schwenningen (DE)**

(54) **Vorrichtung und Verfahren zur Ermittlung der Positionen der Grenzfläche unterschiedlicher Medien**

(57) Verfahren zur Ermittlung der Position der Grenzflächen unterschiedlicher Medien mit Hilfe von elektromagnetischen Wellen, wobei von einem Wellensender eine hinlaufende Welle ausgesandt wird, welche zumindest eine Ausbreitungsgeschwindigkeitskomponente aufweist, welche parallel zu den Grenzflächennormalen der unterschiedlichen Medien ist, die ausgesandte hinlaufende Welle an den jeweiligen Grenzflächen zumindest teilweise reflektiert wird, die jeweiligen Anteile der reflektierten rücklaufenden Wellen von einem Wellenempfänger empfangen werden, die jeweiligen Laufzeiten zwischen Aussendung der hinlaufenden Welle und Empfang der rücklaufenden Wellen bestimmt werden, aus den jeweiligen Laufzeiten unter Berücksichtigung der unterschiedlichen Ausbreitungsgeschwindigkeiten der Welle in den unterschiedlichen Medien die jeweiligen Positionen der Grenzflächen bestimmt werden, wobei die jeweiligen Anteile der reflektierten Wellen in den unterschiedlichen Medien (4, 5) verwendet werden. Wichtig ist hierbei die Berücksichtigung der quadratischen Abhängigkeit von $\varepsilon_r$ vom Reflexionsfaktor r.

Fig. 1

**Beschreibung**

Die Erfindung betrifft eine Vorrichtung sowie ein Verfahren zur Ermittlung der Positionen der Grenzflächen unterschiedlicher Medien, insbesondere der Bestimmung der Schichtdicke des obersten zweier sich überlagernder Füllgüter innerhalb eines Behälters, mit Hilfe von elektromagnetischen Wellen gemäß den Merkmalen der Obebegriffe der Ansprüche 1 und 9.

Solche Vorrichtungen und Verfahren sind u.a. aus WO 00/43739 und WO 00/43806 bekannt. Allerdings beschreiben diese Dokumente lediglich eine funktionelle Abhängigkeit der Dielektrizitätskonstanten $\varepsilon_r$ vom Reflexionsfaktor, also dem Verhältnis der auf der Leitung rücklaufenden Spannung zur hinlaufenden Spannung. Des weiteren offenbaren beide Dokumente nicht Dämpfungsverluste der Leitung.

Der vorliegenden Erfindung liegt deshalb die Aufgabe zugrunde, die in den beiden genannten Dokumenten bekannten Verfahren und Vorrichtungen so weiterzubilden, daß eine exaktere Bestimmung der Grenzflächen beider Medien möglich ist.

Zunächst wird jedoch noch der technologische Hintergrund vorliegender Erfindung beleuchtet.

Zur industriellen Füllstandmessung werden seit geraumer Zeit Messsysteme eingesetzt, die aufgrund der gemessenen Laufzeit von elektromagnetischen Wellen vom oberhalb des Füllguts an der Behälterdecke montierten Sensor zur Füllgutoberfläche und zurück die Distanz zwischen Sensor und Füllgut exakt bestimmen. Aus der Kenntnis der Behälterhöhe kann daraus auf den gesuchten Füllstand im Behälter rückgeschlossen werden. Solche unter dem Oberbegriff Füllstandradar bekannten Sensoren beruhen allesamt auf der Eigenschaft elektromagnetischer Wellen, sich innerhalb eines homogenen nichtleitenden Mediums mit konstanter Geschwindigkeit auszubreiten und an der Grenzfläche unterschiedlicher Medien zumindest teilweise reflektiert zu werden.

Zur Bestimmung der gesuchten Wellenlaufzeit sind unterschiedliche Radarprinzipien bekannt. Die beiden hauptsächlich angewandten Verfahren sind zum einen Pulsradar und zum anderen FMCW-Radar. Das Pulsradar bedient sich der pulsförmigen Amplitudenmodulation der abzustrahlenden Welle und ermittelt die direkte Zeitdauer zwischen Aussendung und Empfang der Pulse. Das FMCW-Radar bestimmt die Laufzeit auf indirektem Weg über die Aussendung eines frequenzmodulierten Signals und Differenzbildung zwischen gesendeter und empfangener Momentanfrequenz.

Neben den unterschiedlichen Radarprinzipien werden auch je nach Anwendung verschiedene Frequenzbereiche der elektromagnetischen Wellen benutzt. So existieren beispielsweise Pulsradars mit Trägerfrequenzen im Bereich zwischen 5 und 30 GHz und daneben ebenso solche, die im Basisband als sogenannte Monopulsradars ohne Trägerfrequenz arbeiten.

Außerdem ist eine Reihe von Verfahren und Vorrichtungen bekannt, die elektromagnetische Welle auf die Füllgutoberfläche und zurück zu leiten. Dabei unterscheidet man grundsätzlich zwischen in den Raum abgestrahlter Welle und durch eine Leitung geführter Welle. Vertreter der ersten Art besitzen eine Antenne, die die Welle ausreichend fokussiert in Richtung Füllgut abstrahlt und wieder empfängt. Ein solches Sensorsystem ist beispielsweise in der DE 42 40 492 C2 dargelegt. Radarsensoren, die die elektromagnetische Welle über eine Leitung zum Reflexionsort und zurück führen, werden oft auch als TDR (time domain reflectometrie)-Sensoren bezeichnet. Die Leitung kann dabei jegliche in der Hochfrequenztechnik übliche Form besitzen. Als Beispiele seien hier die Eindrahtleitung genannt, wie sie in der DE 44 04 745 beschrieben ist, oder der Hohlleiter, wie er in der DE 44 19 462 ausgeführt ist.

Neben den üblichen Füllstand-Radarmessungen, die ausschließlich die Position der Grenzfläche zwischen Füllgut und darüber befindlichem Gasraum (in üblichen Behältern Luftraum) ermitteln, gibt es Anwendungen, bei denen die Position der Grenzschicht zweier unterschiedlicher Füllgüter bzw. die Schichtdicke der oberen Schicht gefragt ist. Da jede Grenzschicht zweier Medien mit unterschiedlicher Dielektrizitätskonstante ein Radarecho erzeugt, empfängt ein Radarsensor in einem solchen Fall Reflexionen von mehreren Stellen. Neben der üblichen Reflexion von der Grenzfläche Gas-oberstes Füllgut entsteht ein Echo an der Grenzfläche der beiden Füllgüter. Weitere Echos können unter Umständen von weiteren Grenzflächen von Füllgütern und auch vom (metallischen) Behälterboden folgen. Durch entsprechende Signalauswertung ist es jedenfalls möglich, das Echo, das von der Reflexion an der Grenzfläche Gas-oberstes Füllgut und das, welches von der Reflexion an der Grenzfläche zum nächstfolgenden Füllgut resultiert, eindeutig zu identifizieren. Aus dem zeitlichen Abstand dieser beiden Echos lässt sich die gesuchte Schichtdicke des obersten Füllguts bestimmen, falls die Ausbreitungsgeschwindigkeit der Welle innerhalb dieses Füllguts bekannt ist. Diese Ausbreitungsgeschwindigkeit v hängt ab von der Dielektrizitätskonstante $\varepsilon_r$ und der Permeabilität $\mu_r$ des Füllguts. Es gilt folgende Formel zur Berechnung aus der Ausbreitungsgeschwindigkeit $v_0$ im Vakuum:

$$v = v_0 \cdot \sqrt{\frac{1}{\varepsilon_r \cdot \mu_r}} \qquad \text{(Gl. 1)}$$

Da die Füllgüter fast nie eine magnetische Eigenschaft besitzen, ist die Permeabilität bekannt ($\mu_r$=1) und als einzige Unbekannte bleibt die Dielektrizitätskonstante $\varepsilon_r$ . Die Ermittlung dieser Konstanten gestaltete sich bisher oft sehr schwierig, da von der Seite der Anwender von entsprechenden Füllstandsensoren kaum Kenntnis über diese Materialeigenschaft des Füllguts besteht. Außerdem werden manche Behälter abwechselnd mit verschiedenen Füllgütern befüllt, deren Dielektrizitätskonstante unterschiedlich ist, wodurch immer wieder eine entsprechende Korrektur durch Neueingabe ihres Wertes notwendig wird. Ein weiteres Problem ergibt sich bisher dadurch, dass die Dielektrizitätskonstante vieler Medien sowohl temperaturabhängig als auch abhängig von der Frequenz der elektromagnetischen Welle ist. Selbst wenn also diese Materialkonstante für eine bestimmte Temperatur und einen definierten Frequenzbereich, beispielsweise bei einigen Kilohertz, bekannt ist, kann davon ausgegangen werden, dass bei anderen Füllguttemperaturen und der Anwendung von Sensorfrequenzen im Hoch- und Höchstfrequenzbereich die Messwertberechnung basierend auf diesem vorgegebenen Wert der Konstanten kein exaktes Ergebnis liefert.

Mit der vorliegenden Erfindung ist es möglich, die bei Trennschichtmessungen mit elektromagnetischen Wellen bisher notwendige manuelle Eingabe der Dielektrizitätskonstanten zu vermeiden. Statt dessen wird ein Verfahren und eine nach diesem Verfahren arbeitende Vorrichtung angegeben, nach dem selbständig die aktuellen füllgutabhängigen Parameter bestimmt werden, die zur Schichtdickenbestimmung notwendig sind.

Des weiteren lässt sich diese Erfindung auch dort anwenden, wo ein Radarsensor nach einem Verfahren arbeitet, wie es in der DE 42 33 324 beschrieben ist. Anstatt die Position einer Füllgutoberfläche aus einer unter Umständen bei Füllgütern mit niedriger Dielektrizitätskonstanten relativ schwachen Reflexion direkt zu bestimmen, wird das in solchem Fall meist starke Echo vom Behälterboden lokalisiert. Nach Kenntnis der Dielektrizitätskonstanten und des Bodenabstandes bei leerem Behälter ist die gesuchte Füllhöhe im Behälter leicht errechenbar.

Während aber der Bodenabstand bei leerem Behälter problemlos vom Sensor gemessen oder aber einmalig eingegeben werden kann, gilt für die Dielektrizitätskonstante gleiches wie eben beschrieben. Durch die vorliegende Erfindung kann auch bei einer Radar-Füllstandmessung nach diesem Verfahren der Bodenverfolgung die Eingabe der Dielektrizitätskonstante durch die sensorinterne Bestimmung des notwendigen Rechenfaktors vorteilhaft ersetzt werden.

Gemäß der vorliegenden Erfindung ist es demnach möglich, aus dem Reflexionsfaktor an der Grenzfläche des Füllguts, dessen Dielektrizitätskonstante von Interesse ist, diese zu bestimmen. Die Ermittlung des Reflexionsfaktors wiederum kann durch Messung der Echoamplitude und Einbeziehung der Kenntnis über die Wellenausbreitung der elektromagnetischen Welle erfolgen. Der in diesem Zusammenhang entscheidende Parameter der Wellenausbreitung ist der Wellenwiderstand $Z_L$. Er ist allgemein definiert als ortsunabhängiger Quotient aus Spannung und Strom in jedem Punkt einer Leitung und lässt sich berechnen mit

$$Z_L := k \cdot \sqrt{\frac{\mu_0}{\varepsilon_0}} \cdot \sqrt{\frac{\mu_r}{\varepsilon_r}} \qquad\qquad \text{(Gl. 2)}$$

wobei k eine wellenausbreitungsabhängige Konstante und $\mu_0$ und $\varepsilon_0$ die magnetische und elektrische Feldkonstante sind. Die Permeabilität $\mu_r$ sowie die Dielektrizitätskonstante $\varepsilon_r$ bezeichnen die Materialkonstanten des feldführenden Mediums. Der Faktor $\sqrt{\mu_0/\varepsilon_0}$ bezeichnet die Freifeldimpedanz $Z_0$ einer Wellenausbreitung im Vakuum und beträgt $377\Omega$.

Für die weiteren Betrachtungen wird davon ausgegangen, dass das wellenführende Medium keine magnetische Komponente besitzt und deshalb $\mu_r = 1$ ist.
Die Konstante k ist abhängig von der Art der Wellenausbreitung, d.h. z.B. von der Leitungsform einer geführten elektromagnetischen Welle. Für einen Radarsensor mit einer koaxialen Messsonde z.B. beträgt der Wellenwiderstand

$$Z_L := \frac{Z_0}{\pi} \cdot \frac{1}{\sqrt{\varepsilon_r}} \cdot \ln\left(\frac{D_A}{d_I}\right) \qquad\qquad \text{(Gl. 3)}$$

mit

$D_A$ = Durchmesser des Außenleiters
$d_I$ = Durchmesser des Innenleiters.

Weitere Beispiele für Wellenwiderstände gebräuchlicher Messsonden:
Zweidrahtsonde:

$$Z_L = \frac{Z_0}{\pi} \cdot \frac{1}{\sqrt{\varepsilon_r}} \cdot \text{arcosh}\left(\frac{s}{d}\right) \qquad\qquad (Gl.\ 4)$$

mit

> s = Abstand der Leiter
> d = Durchmesser der Leiter.

Hohlleiter mit Welle im Grundmode:

$$Z_L = \frac{c}{\sqrt{1 - \left(\frac{\lambda_0}{\lambda_c}\right)^2}} \cdot \frac{1}{\sqrt{\varepsilon_r}} \qquad (Gl.5)$$

mit

> c = Konstante
> $\lambda_0$ = Wellenlänge in Luft
> $\lambda_c$ = Grenzwellenlänge des luftgefüllten Hohlleiters

Bei der Freiraumwellenausbreitung schließlich ist der Wellenwiderstand

$$(Gl.\ 6) \qquad Z_L := Z_0 \cdot \frac{1}{\sqrt{\varepsilon_r}}$$

Bekannte Form der Wellenausbreitung und gegebenenfalls der Leitungskonstruktion vorausgesetzt gibt es also immer einen eindeutigen Zusammenhang zwischen Wellenwiderstand $Z_L$ und Dielektrizitätskonstante $\varepsilon_r$ des Ausbreitungsmediums. Im Allgemeinen kann man davon ausgehen, dass sich der Wellenwiderstand umgekehrt proportional zur Quadratwurzel von $\varepsilon_r$ verhält.

Ist das Ausbreitungsmedium ein Gas, so kann man in guter Näherung die Dielektrizitätskonstante des Gases zu 1 setzen:

$$Z_{Gas} = Z_L(\varepsilon_r = 1) \qquad\qquad (Gl.\ 7)$$

Für den Fall, dass das Ausbreitungsmedium ein Füllgut mit der Dielektrizitätskonstanten $\varepsilon_r$ ist, läßt sich dann dessen Wellenwiderstand ausdrücken mit:

$$Z_{L,Füllgut} := \frac{1}{\sqrt{\varepsilon_r}} \cdot Z_{Gas} \qquad\qquad (Gl.\ 8)$$

Der Reflexionsfaktor der Welle an der Grenzfläche ist definiert als das Verhältnis der Amplituden der elektrischen Feldstärken von rücklaufender Welle zu hinlaufender Welle am Ort der Reflexion. Da es sich um ein Amplitudenverhältnis handelt, wird hier und für die weitere Beschreibung die Amplitude der elektrischen Feldstärke der Welle ersetzt durch ein dazu proportionales Spannungsmaß U.

Der Reflexionsfaktor r läßt sich dann ausdrücken als Quotient aus Spannung $U_R$, proportional zur Feldstärke der rücklaufenden Welle, und Spannung $U_H$, proportional zur Feldstärke der hinlaufenden Welle:

$$r := \frac{U_R}{U_H} \qquad \text{(Gl. 9)}$$

Er ist in folgender Weise von den Wellenwiderständen $Z_1$, $Z_2$ der beiden Medien einer Grenzfläche abhängig:

$$r := \frac{Z_2 - Z_1}{Z_2 + Z_1} \qquad \text{(Gl. 10)}$$

Damit lässt sich gleichsetzen:

$$\frac{U_R}{U_H} := \frac{Z_2 - Z_1}{Z_2 + Z_1} \qquad \text{(Gl. 11)}$$

Durch Umformung folgt daraus:

$$Z_2 := \frac{U_H + U_R}{U_H - U_R} \cdot Z_1 \qquad \text{(Gl. 12)}$$

Auf den Fall der Grenzfläche Gas ⁙ Füllgut bezogen lautet diese Gleichung:

$$Z_{\text{Füllgut}} := \frac{U_H + U_R}{U_H - U_R} \cdot Z_{Gas} \qquad \text{(Gl. 13)}$$

Durch Vergleich der beiden Gleichungen 8 und 13 erhält man den Zusammenhang :

$$\frac{1}{\sqrt{\varepsilon_r}} := \frac{U_H + U_R}{U_{H - U_R}} \qquad \text{(Gl. 14)}$$

bzw durch Umformen von Gl. 14 :

$$\varepsilon_r := \left( \frac{U_H - U_R}{U_H + U_R} \right)^2 \qquad \text{(Gl. 15)}$$

Damit läßt sich der gesuchte DK-Wert $\varepsilon_r$ durch Ermittlung der Amplituden von hin- und rücklaufender Welle am Reflexionsort nach Gleichung 15 ermitteln, wenn wie vorausgesetzt der Wellenwiderstand der Leitung umgekehrt proportional zur Quadratwurzel der Dielektrizitätskonstanten $\varepsilon_r$ des wellenführenden Mediums ist.

Bei Leitungen, bei denen diese Proportionalität nicht besteht, läßt sich der aufgezeigte Lösungsweg genauso anwenden, wenn der Zusammenhang zwischen Änderung der Dielektrizitätskonstanten des Mediums, in dem sich die Welle ausbreitet, und Änderung des entsprechenden Wellenwiderstandes bekannt ist.

Zur Ermittlung der Spannungen von hin- und rücklaufender Welle am Ort der Reflexion ist folgende Methode zu bevorzugen: Die Spannung der hinlaufenden Welle kann ermittelt werden aus einer Messung der Echoamplitude einer genau definierten, bekannten Reflexionsstelle. Diese Reflexionsstelle kann innerhalb des Sensors liegen, z.B. in einer bekannten Leitungsimpedanzänderung in der Zuleitung zwischen Elektronik und Sonde. Sie kann genauso gut ein Teil der Messstrecke innerhalb des Behälters sein, z.B. die Totalreflexion der Welle am metallischen Behälterboden bei leerem Behälter oder das leerlaufende oder kurzgeschlossene Leitungsende der Sonde bei leerem Behälter. Bei konstanter Sendespannung des Sensors genügt es, diese Amplitude der hinlaufenden Welle einmalig zu messen (eventuell schon bei werksseitigem Abgleich des Gerätes) und den Wert dauerhaft zu speichern. Durch Kenntnis der Streckendämpfungen der Wellenausbreitung lässt sich damit die Amplitude der hinlaufenden Welle am Reflexionsort berechnen. Die Amplitude der rücklaufenden Welle am Reflexionsort ergibt sich aus der Ermittlung der Echoamplitude der Reflexionsstelle aus dem momentan aufgenommenen Echoprofil heraus.

Im Folgenden wird beispielhaft anhand der Zeichnungen die Funktionsweise einer erfindungsgemäßen Vorrichtung zur Ermittlung der Grenzflächen zweier Medien gezeigt und die Anwendung des erfindungsgemäßen Verfahrens erläutert. Es zeigen:

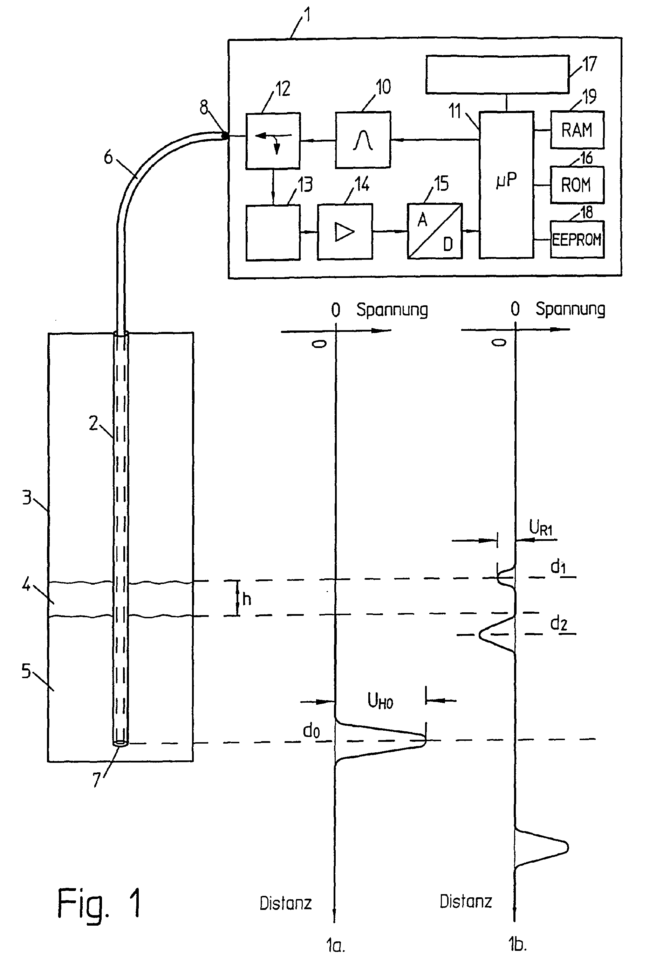

Fig. 1         eine erfindungsgemäße Vorrichtung zur Ermittlung der Grenzflächen zweier Medien,

Fig. 1a      ein beispielhaftes Echoprofil bei leerem Behälter mit reflektierten Puls vom Sondenende,

Fig. 1b      ein beispielhaftes Echoprofil bei befülltem Behälter gemäß Fig. 1 mit reflektierten Pulsen von unterschiedlichen Grenzflächen.

Die erfindungsgemäße Vorrichtung (im Beispiel ein Koax-Sensor) zur Ermittlung der Grenzflächen zweier Medien besteht aus einer Elektronik 1 und einer beispielsweise koaxialen Sonde 2, die in einen Behälter 3 eingebaut ist und über ein Verbindungskabel 6 mit der Elektronik 1 verbunden ist. Im Behälter 3 befinden sich ein oberes Füllgut 4 und ein unteres Füllgut 5, wobei vom Sensor die Schichtdicke h des oberen Füllguts 4 anzuzeigen ist.

Die Elektronik 1 basiert beispielhaft auf einem Mikroprozessor 11, an dem ein RAM 19, ein ROM 16, ein EEPROM 18 und ein Display 17 angeschlossen ist. Fernerhin ist der Mikroprozessor 11 mit einem Pulsgenerator 10 verbunden, welcher wiederum an einen Richtkoppler 12 angeschlossen ist. Der Richtkoppler 12 bildet einerseits den Anschluss 8 zum Verbindungskabel 6 und ist andererseits mit einer Samplingschaltung 13 verbunden. Mit dieser Schaltung wird das empfangene Echosignal zeitlich gedehnt nach einem Prinzip, wie es in der DE-A-31 07 444 beschrieben ist. Zum Zwecke der offenbarung wird auf dieses Dokument vollinhaltlich Bezug genommen. Die Verstärkung des zeitgedehnten Echosignals geschieht im Empfangsverstärker 14, der wiederum über einen A/D-Wandler 15 mit dem Mikroprozessor 11 verbunden ist.

Die Bestimmung der Schichtdicke h des oberen Füllguts 4 erfolgt wie im Folgenden beschrieben ist:

Dazu generiert die Elektronik 1 im Pulsgenerator 10, ausgelöst durch den Mikroprozessor 11, Sendepulse, die über den Richtkoppler 12 und das Verbindungskabel 6 zur Sonde 2 geleitet werden. Nach Reflexion der Sendepulse an den innerhalb der Sonde 2 bestehenden Wellenwiderstandsänderungen, die den Grenzflächen zwischen Gas und oberem Füllgut 4, oberem Füllgut 4 und unterem Füllgut 5 sowie dem Sondenende 7 entsprechen, werden die Empfangspulse über den Richtkoppler 12 zur Sampling-Schaltung 13 und Empfangsverstärker 14 geführt. Nach dem Sampling und der Verstärkung sowie einer Analog-Digital-Wandlung durch den A/D-Wandler 14 speichert der Mikroprozessor 11 das abgetastete Echoprofil im RAM 19. Im ROM 16 ist das Programm gespeichert, nach dem der Mikroprozessor einen Messzyklus einleitet, das empfangene Echoprofil abspeichert, auswertet und nach entsprechender Berechnung auf dem Display 17 die Schichtdicke h anzeigt. Im EEPROM 18 sind dazu Informationen gespeichert, die die Vorrichtung zur Ermittlung der Grenzflächen zweier Medien betreffen und zur erfindungsgemäßen Ermittlung des Messergebnisses notwendig sind. Diese Informationen können von der erfindungsgemäßen Vorrichtung im laufenden Betrieb bei Bedarf neu ermittelt und ins EEPROM 18 geschrieben werden. Sie betreffen beispielsweise die Amplitude der Spannung $U_H$ der hinlaufenden Welle, die Ausbreitungsdämpfung a der Welle, konstruktive Daten der erfindungsgemäßen Vorrichtung sowie den Zusammenhang zwischen dem Wellenwiderstand $Z_L$ der Sonde und der Dielektrizitätskonstanten ($\varepsilon_{r,\,Füllgut}$) des (oberen und unteren) Füllguts.

Bei der herstellerinternen Kalibrierung der erfindungsgemäßen Vorrichtung und bei leerem Behälter 3 generiert die Elektronik 1 ein Echoprofil, wie es unter Fig. 1a dargestellt ist.

Das elektrisch leerlaufende Sondenende 7 erzeugt eine Totalreflexion der hinlaufenden Welle $U_H$ im Abstand $d_0$, die der Sondenlänge entspricht. Die im Empfänger gemessene Spannungsamplitude $U_{H0}$ dieses Echos stellt ein Maß für die Spannung $U_H$ der hinlaufenden Welle dar, welches wie erwähnt dauerhaft gespeichert wird.

Bei teilweise befülltem Behälter 3 ergibt sich beispielsweise ein Echoprofil, wie es in Fig. 1b dargestellt ist. Anhand dieses-Profils können die ersten und zweiten Abstände $d_1$ und $d_2$ errechnet werden, die die Positionen der Grenzflächen des oberen Füllguts 4 markieren. Alle Abstände $d_0$, $d_1$, $d_2$ werden zunächst auf der Grundlage der Wellenausbreitung in Vakuum bzw. Gas berechnet, deshalb entspricht die Differenz zwischen dem zweiten Abstand und dem ersten Abstand $d_2 - d_1$ nicht der gesuchten Schichtdicke h. Durch Messung der Echospannungsamplitude $U_{R1}$ der Reflexion an der Grenzfläche Gas - Füllgutschicht 4 lässt sich zusammen mit den übrigen vorliegenden Informationen die Schichtdicke h aus der Differenz der Abstände $d_2 - d_1$ auf folgendem Weg berechnen:

Der Spannungsreflexionsfaktor r am ersten Abstand $d_1$ beträgt

$$r := \frac{U_{R1}}{U_{H1}} \qquad\qquad\text{(Gl. 16)}$$

wobei die Spannungsamplitude $U_{H1}$ der hinlaufenden Welle der Grenzfläche Gas - oberes Füllgut 4 unter Einbeziehung der Ausbreitungsdämpfung a ( angegeben in dB/m) aus dem bekannten Amplitudenmaß $U_{H0}$ an der Stelle $d_0$ berechnet

werden kann.

$$U_{H1} := U_{H0} \cdot 10^{\frac{-a \cdot (d_0 - d_1)}{20}} \qquad \text{(Gl. 17)}$$

Gemäß Gleichung 15 ist damit nach Kenntnis der Spannungen $U_{H1}$ und $U_{R1}$ die Dielektrizitätskonstante $\varepsilon_r$ des Füllgutes direkt errechenbar gemäß

$$\varepsilon_r = \left(\frac{1-r}{1+r}\right)^2 \qquad \text{(Gl. 18)}$$

wobei r den Refelxionsfaktor auf der Leitung und damit das Verhältnis rücklaufender Spannung zu hinlaufender Spannung bezeichnet. Es ist deutlich erkennbar, daß die Dielektrizitätskonstante $\varepsilon_r$ nicht linear sondern quadratisch von r abhängt.

Die Berechnung der Schichtdicke h erfolgt gemäß der verringerten Ausbreitungsgeschwindigkeit der Welle im Medium 4 nach Gelichung 1 durch folgende Gleichung

$$h = (d_2 - d_1) \cdot \frac{1}{\sqrt{\varepsilon_r}} \qquad \text{(Gl. 19)}$$

bzw. durch einsetzen von Gleichung 15

$$h = (d_2 - d_1) \cdot \left(\frac{U_{H1} + U_{R1}}{U_{H1} - U_{R1}}\right) \qquad (Gl.20).$$

Für die Angabe der Spannungen muss deren Polarität beachtet werden. Wird $U_{H0}$ nicht über eine Leerlaufmessung, sondern über eine Kurzschlussmessung bestimmt, so muss beachtet werden, dass ein Kurzschluss die Polarität der reflektierten Spannung invertiert.

Das folgende zahlenmäßige Beispiel, abgeleitet aus Fig. 1a und 1b, soll die Beschreibung der bevorzugten Ausführung von erfindungsgemäßer Vorrichtung und Verfahren nach Fig. 1 abschließen:

gemessene Werte: $d_0$ = 2,00m $\qquad d_1$ = 1,20m $\qquad d_2$ = 1,50m

$\qquad\qquad\qquad\quad U_{H0}$ = 750mV $\qquad U_{R1}$ = -150mV

Vorbekannte Ausbreitungsdämpfung der Welle auf der Koax-Sonde: a = -0,1 dB/m

Berechnete Werte nach obenstehenden Gleichungen 17 und 20:

Spannungsamplitude der hinlaufenden Welle an der Grenzfläche Gas - oberes Füllgut 4 : $\qquad U_{H1}$ = 757mV

Schichtdicke: $\qquad$ h = 0,201 m

Die Dielektrizitätskonstante des Füllguts 4 beträgt in diesem

Fall: $\qquad \varepsilon_r$, Füllgut = 2,233

Bei sehr geringer Ausbreitungsdämpfung a kann diese auch vernachlässigt werden und man setzt $U_{H1} = U_{H0}$

Die vorliegende Erfindung ist nicht auf das ausgeführte Beispiel beschränkt, sondern lässt sich wie schon erwähnt bei allen denkbaren Formen der Wellenausbreitung anwenden, wenn der Zusammenhang zwischen Dielektrizitätskonstante und Wellenwiderstand der Ausbreitung bekannt ist. Außerdem muss die Grenzfläche, an der der Reflexionsfaktor r bestimmt wird, nicht zwingend die Grenzfläche Gas - Füllgut 4 sein. Bei vollgefülltem Behälter 3 z. B. kann der Wellenwiderstand der gasgefüllten Sonde 2 auch durch den bekannten Wellenwiderstand der Zuleitung 6 ersetzt werden.

Ebenso ist neben der Bestimmung des Maßes der hinlaufenden Welle über eine Totalreflexion am Kurzschluss (z.B. metallischer Behälterboden) oder Leerlauf (z.B. am offenen Sondenende 7) auch jede andere Reflexionsstelle innerhalb des Sensors oder entlang der Messstrecke geeignet, deren Reflexionsfaktor r bekannt ist. Die Bestimmung des Maßes der hinlaufenden Welle kann einmalig innerhalb eines Kalibriervorgangs beim Hersteller oder von Zeit zu Zeit während des Betriebes, z.B. bei entleertem Behälter 3, durchgeführt werden.

Das Maß der Amplitude der hinlaufenden Welle muss nicht als absoluter Wert bestimmt werden, sondern wird vorteilhafter Weise als relativer Wert angegeben, der nach Reflexion und Durchlauf des reflektierten Pulses durch den Empfänger als Empfangsamplitude durch den A/D-Wandler abgetastet wird. Da die zweite zu verrechnende Spannung, die der rücklaufenden Welle, ebenfalls als relatives Maß nach Durchlauf desselben Empfangsweges zur Verfügung steht, ergibt sich der Vorteil, dass Verstärkungsänderungen im Empfangsweg, die z.B. durch Alterung oder Temperaturänderung möglich sind, sich in keiner Weise negativ auf das Ergebnis auswirken. Denn diese möglichen Änderungen wirken sich auf das Maß der hinlaufenden wie auch der rücklaufenden Welle genau gleich aus.

Des weiteren muss der Radarsensor nicht nach dem Pulsverfahren (TDR-Sensor) arbeiten, sondern die Erfindung eignet sich auch für alle anderen Verfahren, die elektromagnetische Wellen zur Entfernungsbestimmung benutzen.

Schließlich kann das erfindungsgemäße Verfahren nicht nur bei Bestimmung der obersten Schichtdicke bei sich überlagernden Füllgütern, sondern auch bei der Methode der Radar-Füllstandbestimmung nach der Verfolgung des Bodenechos vorteilhaft verwendet werden.

Bezugszeichenliste

| | |
|---|---|
| 1 | Elektronik |
| 2 | Sonde |
| 3 | Behälter |
| 4 | oberes Füllgut |
| 5 | unteres Füllgut |
| 6 | Verbindungskabel |
| 7 | Sondenende |
| 8 | Anschluss |
| 10 | Pulsgenerator |
| 11 | Mikroprozessor |
| 12 | Richtkoppler |
| 13 | Sampling-Schaltung |
| 14 | Empfangsverstärker |
| 15 | AD-Wandler |
| 16 | ROM |
| 17 | Display |
| 18 | EEPROM |
| 19 | RAM |

| | |
|---|---|
| $\varepsilon_o$ | elektrische Feldkonstante |
| $\varepsilon_r$ | Dielektrizitätskonstante |
| $\varepsilon_{r,\,Füllgut}$ | Dielektrizitätskonstante des Füllguts |
| $\mu_o$ | magnetische Feldkonstante |
| $\mu_r$ | Permeabilität |
| $\lambda_c$ | Grenzwellenlänge des luftgefüllten Hohlleiters |
| $\lambda_o$ | Wellenlänge in Luft |

| | |
|---|---|
| a | Ausbreitungsdämpfung |
| C | Konstante |
| d | Durchmesser der Leiter |
| $d_1$ | erster Abstand |
| $d_2$ | zweiter Abstand |
| $D_A$ | Durchmesser des Außenleiters |
| $d_I$ | Durchmesser des Innenleiters |
| $d_o$ | Abstand des Sondenendes |
| h | Schichtdicke des oberen Füllguts |
| K | Konstante |
| r | Spannungsreflexionsfaktor |
| s | Abstand der Leiter |

| | |
|---|---|
| $U_H$ | Spannung der hinlaufenden Welle |
| $U_{Ho}$ | Echospannungsamplitude der hinlaufenden Wellen bei Reflexion an Sonderende 7 |
| $U_{H1}$ | Spannungsamplitude der hinlaufenden Welle an Grenzfläche Gas - oberes Füllgut |
| $U_R$ | Spannung der rücklaufenden Welle |
| $U_{R1}$ | Echospannungsamplitude (der rücklaufenden Welle) bei Reflexion an Grenzfläche Gas - oberes Füllgut 4 |
| V | Ausbreitungsgeschwindigkeit einer elektromagnetischen Welle |
| $V_o$ | Ausbreitungsgeschwindigkeit einer elektromagnetischen Welle im Vakuum |
| $Z_0$ | Freifeldimpedanz im Vakuum |
| $Z_1$ | Wellenwiderstand der vom erstem Medium umgebenen Leitung |
| $Z_2$ | Wellenwiderstand der vom zweitem Medium umgebenen Leitung |
| $Z_{Gas}$ | Wellenwiderstand der von Gas umgebenen Leitung |
| $Z_L$ | Wellenwiderstand |
| $Z_{L,\,Füllgut}$ | Wellenwiderstand der vom Füllgut umgebenen Leitung |

**Patentansprüche**

1. Verfahren zur Ermittlung der Position mindestens einer Grenzfläche unterschiedlicher Medien mit Hilfe von elektromagnetischen Wellen, wobei

   - von einem Wellensender eine hinlaufende Welle ausgesandt wird, welche zumindest eine Ausbreitungsgeschwindigkeitskomponente aufweist, welche parallel zu der oder den Grenzflächennormalen der unterschiedlichen Medien ist,
   - die ausgesandte hinlaufende Welle an der mindestens einen Grenzfläche zumindest teilweise reflektiert wird,
   - die jeweiligen Anteile der reflektierten rücklaufenden Wellen von einem Wellenempfänger empfangen werden,
   - die jeweiligen Laufzeiten zwischen Aussendung der hinlaufenden Welle und Empfang der rücklaufenden Wellen bestimmt werden,
   - aus den jeweiligen Laufzeiten unter Berücksichtigung der unterschiedlichen Ausbreitungsgeschwindigkeiten der Wellen in den unterschiedlichen Medien die Position der mindestens einen Grenzfläche bestimmt wird,

   **dadurch gekennzeichnet, dass** die jeweiligen Anteile der reflektierten rücklaufenden Wellen zur Bestimmung der unterschiedlichen Ausbreitungsgeschwindigkeiten (v) in den unterschiedlichen Medien (4, 5) verwendet werden, wobei die unterschiedlichen Ausbreitungsgeschwindigkeiten (v) der Welle in den unterschiedlichen Medien (4, 5) mit Hilfe der jeweiligen Amplitudenverhältnisse (r ) der hinlaufenden Welle ($U_{H1}$) zu den rücklaufenden Wellen ($U_{R1}$) unter Berücksichtigung einer quadratischen Abhängigkeit der Dielektrizitätskonstanten $\varepsilon_r$ von den jeweiligen Amplitudenverhältnissen (r) (= Reflexionsfaktor) bestimmt werden.

2. Verfahren nach Anspruch 1,
   **dadurch gekennzeichnet, daß** die Dielektrizitätskonstante $\varepsilon_r$ von den jeweiligen Amplitudenverhältnissen (r) als von folgender Gleichung

$$\varepsilon_r = \left(\frac{1+r}{1-r}\right)^2$$

   abhängig bestimmt wird.

3. Verfahren nach Anspruch 2,
   **dadurch gekennzeichnet, dass** die Amplitude ($U_{H1}$) der hinlaufenden Welle aus einer Messung einer Echoamplitude ($U_{H0}$) an einer genau definierten bekannten Reflexionsstelle ermittelt wird.

4. Verfahren nach einem der vorangegangenen Ansprüche,
   **dadurch gekennzeichnet, dass** die Amplitude ($U_{H1}$) der hinlaufenden Welle fest vorgegeben ist.

5. Verfahren nach einem der vorangegangenen Ansprüche,
   **dadurch gekennzeichnet, dass** die Streckendämpfung (a) in den jeweiligen Medien berücksichtigt wird.

6. Anwendung des Verfahrens nach einem der Ansprüche 1 bis 5 zur Bestimmung der Schichtdicken (h) mindestens zweier sich überlagernder Füllgüter (4, 5) innerhalb eines Behälters (3).

**7.** Anwendung des Verfahrens nach einem der vorangegangenen Ansprüche beim Pulsradarverfahren.

**8.** Anwendung des Verfahrens nach einem der Ansprüche 1 bis 6 beim FMCW-Radarverfahren.

**9.** Vorrichtung zur Ermittlung der Positionen der Grenzflächen unterschiedlicher Medien (4, 5) mit Hilfe von elektromagnetischen Wellen

- mit einem Wellensender zum Aussenden einer hinlaufenden Welle, welche zumindest eine Ausbreitungsgeschwindigkeitskomponente aufweist, welche parallel zu den Grenzflächennormalen der unterschiedlichen Medien ist und welche an den jeweiligen Grenzflächen zumindest teilweise reflektiert wird,
- mit einem Wellenempfänger zum Empfangen der jeweiligen Anteile der reflektierten rücklaufenden Wellen,
- mit einer ersten Auswerteeinheit zur Bestimmung der jeweiligen Laufzeiten zwischen Aussendung der hinlaufenden Welle und Empfang der reflektierten rücklaufenden Welle,
- mit einer zweiten Auswerteeinheit zur Bestimmung der jeweiligen Positionen der Grenzflächen aus den jeweiligen Laufzeiten unter Berücksichtigung der unterschiedlichen Ausbreitungsgeschwindigkeit in der Welle in den unterschiedlichen Medien,

**dadurch gekennzeichnet, dass** eine dritte Auswerteeinheit vorgesehen ist, zur Bestimmung der unterschiedlichen Ausbreitungsgeschwindigkeiten (v) in den unterschiedlichen Medien (4, 5) aus den jeweiligen Anteilen ($U_{R1}$) der reflektierten rücklaufenden Welle, wobei die unterschiedlichen Ausbreitungsgeschwindigkeiten (v) der Welle in den unterschiedlichen Medien (4, 5) mit Hilfe der jeweiligen Amplitudenverhältnisse (r) der hinlaufenden Welle ($U_{H1}$) zu den rücklaufenden Wellen ($U_{R1}$) unter Berücksichtigung einer quadratischen Abhängigkeit der Dielektrizitätskonstanten $\varepsilon_r$ von den jeweiligen Amplitudenverhältnissen (r) (= Reflexionsfaktor) bestimmt werden.

**10.** Vorrichtung nach Anspruch 9,
**dadurch gekennzeichnet, dass** die dritte Auswerteeinheit (11) derart ausgebildet ist, dass die unterschiedlichen Ausbreitungsgeschwindigkeiten (v) der Welle in den unterschiedlichen Medien (4, 5) mit Hilfe der jeweiligen Amplitudenverhältnisse (r) der hinlaufenden Welle ($U_{H1}$) zu den rücklaufenden Wellen ($U_{R1}$) bestimmbar ist.

**11.** Vorrichtung nach Anspruch 10,
**dadurch gekennzeichnet, dass** eine genau definierte bekannte Reflexionsstelle vorgesehen ist, so dass die Amplitude ($U_{A1}$) der hinlaufenden Welle aus einer Messung einer Echoamplitude ($U_{H0}$) an dieser Reflexionsstelle ermittelbar ist.

**12.** Vorrichtung nach Anspruch 11,
**dadurch gekennzeichnet, dass** die Reflexionsstelle Bestandteil der Vorrichtung ist.

**13.** Vorrichtung nach einem der Ansprüche 9 bis 12,
**dadurch gekennzeichnet, dass** die Amplitude ($U_{H1}$) der hinlaufenden Welle fest vorgebbar ist.

**14.** Vorrichtung nach Anspruch 13,
**dadurch gekennzeichnet, dass** die Amplitude ($U_{H1}$) der hinlaufenden Welle werksseitig fest vorgegeben ist.

**15.** Vorrichtung nach einem der Ansprüche 9 bis 14,
**dadurch gekennzeichnet, dass** ein Behälter (3) vorgesehen ist, zur Aufnahme unterschiedlicher sich überlagernder Füllgüter (4, 5) und dass das Sondenende (7) einer Sonde (2), welche Bestandteil des Wellensenders und des Wellenempfängers ist, im Wesentlichen in Richtung auf den Behälterboden ausgerichtet ist.

**16.** Vorrichtung nach Anspruch 15,
**dadurch gekennzeichnet, dass** die Sonde eine Koax-Sonde (2), eine Ein- oder Zweidrahtsonde oder ein Hohlleiter ist.

**17.** Vorrichtung nach Anspruch 15 oder 16,
**dadurch gekennzeichnet, dass** die Reflexionsstelle in einer bekannten Leitungsimpedanzänderung in der Zuleitung (6) zur Sonde (2) ist.

**18.** Vorichtung nach Anspruch 15 oder 16,
**dadurch gekennzeichnet, dass** die Reflexionsstelle am Behälterboden ist.

**19.** Vorrichtung nach Anspruch 15 oder 16,
**dadurch gekennzeichnet, dass** die Reflexionsstelle das leerlaufende oder kurzgeschlossene Sondenende (7) ist.

**20.** Vorrichtung nach einem der vorangegangenen Ansprüche,
**dadurch gekennzeichnet, dass** eine Elektronik (1) vorgesehen ist

- mit einem Mikroprozessor (11)
- mit einem an den Mikroprozessor (11) angeschlossenen RAM (19)
- mit einem an den Mikroprozessor (11) angeschlossenen ROM (16)
- mit einem an den Mikroprozessor (11) angeschlossenen EEPROM (18)
- mit einem an den Mikroprozessor (11) angeschlossenen Display (17)
- mit einem an den Mikroprozessor (11) angeschlossenen Pulsgenerator (10),
- mit einem an den Pulsgenerator (10) angeschlossenen Richtkoppler (12), welcher einen Anschluss (8) zum Senden und Empfangen von Wellen aufweist und welcher
- mit einem Empfangsverstärker (14) verbunden ist,
- mit einem an den Empfangsverstärker (14) angeschlossenen A/D-Wandler (15), welcher mit dem Mikroprozessor (11) verbunden ist.

Fig. 1